# EUROPÄISCHE PATENTSCHRIFT

(11) **EP 0 499 665 B1**
(45) Veröffentlichungstag und Bekanntmachung des Hinweises auf die Patenterteilung: **27.07.1994**
(21) Anmeldenummer: 91102404.0
(22) Anmeldetag: 20.02.1991
(51) Int. Cl.: B60R 22/18

(54) **Rückstrammvorrichtung in einem Sicherheitsgurtsystem für Fahrzeuge**
Pre-tensioning device in a seat-belt system for automotive vehicles
Dispositif pré-tendeur dans un système de ceinture de sécurité pour véhicules

(43) Veröffentlichungstag der Anmeldung: 26.08.1992
(73) Patentinhaber: TRW REPA GMBH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 305 765
- DE-A- 3 834 840

## Beschreibung

Die Erfindung betrifft eine Rückstrammvorrichtung in einem Sicherheitsgurtsystem für Fahrzeuge, mit einem mechanischen Rückstrammantrieb, der eine vorgespannte Schraubenfeder aufweist und an einem Beschlagteil des Sicherheitsgurtsystems angreift, und mit einem Auslösemechanismus, der eine Feder in ihrem vorgespannten Zustand hält und fahrzeugsensitiv zur Auslösung eines Rückstrammvorganges freigibt.

Die Wirksamkeit von Rückstrammvorrichtungen zum Schutze der Fahrzeuginsassen bei einer Kollision ist erwiesen. Einer weiten Verbreitung der Rückstrammvorrichtungen in Fahrzeugen, insbesondere Kraftfahrzeugen, steht nur der damit verbundene hohe Aufwand entgegen. Erhebliche Einsparungen gegenüber Rückstrammvorrichtungen mit pyrotechnischem Antrieb werden durch die Verwendung von mechanischen Rückstrammantrieben erzielt, bei denen ein Kraftspeicher in Form einer gespannt gehaltenen Feder verwendet wird, die sich bei einem Rückstrammvorgang plötzlich entspannt. Die Feder wird durch einen Auslösemechanismus in ihrem gespannten Ruhezustand gehalten. Der Auslösemechanismus verfügt über eine fahrzeugsensitive Masse, die beispielsweise ein Pendel bildet, das auf Fahrzeugverzögerungen anspricht und bei Erreichen eines vorbestimmten Auslösekriteriums den Auslösemechanismus ansteuert, so daß dieser die Feder freigibt. Eine solche gattungsgemäße Vorrichtung ist beispielsweise durch die EP-A- 305 765 offenbart.

Durch die Erfindung wird eine Rückstrammvorrichtung mit mechanischem Rückstrammantrieb geschaffen, die sich durch Einfachheit, geringen Aufwand, kompakte Bauform und hohe Auslösegenauigkeit auszeichnet.

Bei der erfindungsgemäßen Rückstrammvorrichtung bildet die Feder einen wesentlichen Bestandteil der Sensormasse des Auslösemechanismus. Da die Feder die einzige Kraftquelle für den Rückstrammvorgang darstellt und entsprechend stark dimensioniert werden muß, weist sie eine beträchtliche Masse auf. Diese Masse kann - mit der Masse weiterer, mit der Feder gekoppelter Teile - genutzt werden, um Fahrzeugverzögerungen festzustellen und zu messen. Die Feder ist als Schraubenfeder ausgebildet und in einem Führungsrohr aufgenommen, welches relativ zu einem fahrzeugfesten Gehäuse in Axialrichtung tranlationsverschiebbar gelagert und durch Federspannung in eine Ruhestellung vorgespannt ist. Die Auslöseempfindlichkeit kann durch Bemessung dieser Federspannung eingestellt werden. Die Translationsverschiebung des Führungsrohres relativ zu dem Gehäuse ist dann ein Maß für die aufgetretene Fahrzeugverzögerung. Die Translationsverschiebung des Führungsrohres mit der darin aufgenommenen, gespannten Feder entgegen der die Auslöseschwelle bestimmenden Federspannung entspricht einer Integration der aufgetretenen Verzögerungswerte über die Zeit. Die Auslösung erfolgt, sobald das Führungsrohr eine Verlagerung über eine Strecke von vorbestimmter Größe relativ zum Gehäuse erfahren hat.

Weitere Merkmale und Vorteile der Erfindung ergeben sich aus der folgenden Beschreibung und aus der Zeichnung, auf die Bezug genommen wird. In der Zeichnung zeigen:
- Fig. 1: eine schematische Schnittansicht einer Ausführungsform der Rückstrammvorrichtung, die an einem Gurtschloß des Sicherheitsgurtsystems angreift;
- Fig. 2: einen Schnitt entlang der Ebene II-II in Fig. 1;
- Fig. 3: einen Schnitt entlang der Ebene III-III in Fig. 1;
- Fig. 4: einen Schnitt entlang der Linie IV-IV in Fig. 1;
- Fig. 5: eine Perspektivansicht eines Seil-Umlenkelements für die in Fig. 1 gezeigte Ausführungsform;

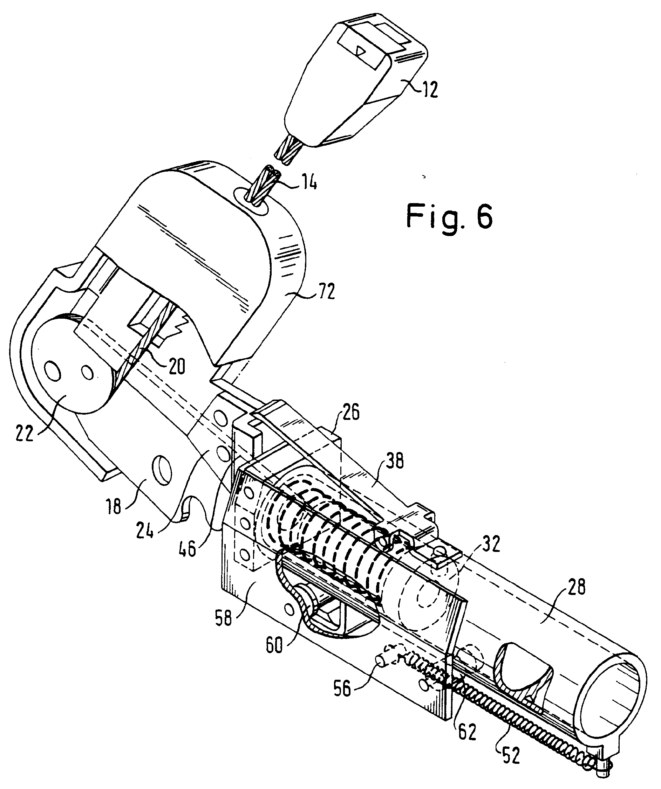

- Fig. 6: eine teilweise aufgeschnitten gezeigte Perspektivansicht der Rückstrammvorrichtung; und
- Fig. 7: eine im Schnitt gezeigte Teilansicht einer zweiten Ausführungsform der Rückstrammvorrichtung.

Bei den hier beschriebenen Ausführungsformen einer Rückstrammvorrichtung greift der mechanische Rückstrammantrieb über ein Zugseil am Verankerungsbeschlag eines Gurtschlosses des Sicherheitsgurtsystems an. Der mit 10 bezeichnete Verankerungsbeschlag, an dem das Gurtschloß 12 über eine Seilschlaufe 14 angeschlossen ist, ist in einer rechteckförmigen Ausnehmung 16 einer lasttragend dimensionierten und am Fahrzeugaufbau zu befestigenden Montageplatte 18 verschiebbar geführt. An den Verankerungsbeschlag 10 ist ein Zugseil 20 angeschlossen, das über ein Umlenkelement 22 zu einem Rückstrammantrieb geführt ist, der nun im einzelnen beschrieben wird.

Die Montageplatte 18 bildet mit einer über ein Winkelstück 24 an ihrem einen Ende angeschlossenen Stützplatte 26 eine gemeinsame Stützstruktur für den Rückstrammantrieb und den Verankerungsbeschlag 10. Der Rückstrammantrieb umfaßt eine in einem Führungsrohr 28 im komprimierten Zustand aufgenommene Schraubenfeder 30. Die Schraubenfeder 30 stützt sich mit ihrem der Stützplatte 26 benachbarten Ende am Boden des Führungsrohres 28 ab; das gegenüberliegende Ende der Schraubenfeder 30 stützt sich an einer zur Stützplatte 26 hinweisenden Stufe eines hülsenförmigen Kolbens 32 ab, der im Inneren des Führungsrohres 28 gleitverschiebbar aufgenommen ist. Das Zugseil 20 erstreckt sich in das Innere des hülsenförmigen Kolbens 32 hinein und durch eine Bohrung in einer Zwischenwandung 34 im Inneren des Kolbens 32 hindurch. Auf dem freien Ende des Zugseils 20 ist ein Anschlagklötzchen 36 aufgepreßt.

Die Schraubenfeder 30 wird in dem Führungsrohr 28 mittels eines Rasthebels 38 im gespannten Zustand gehalten. Dieser Rasthebel 38 ist zweiarmig ausgebildet und am Führungsrohr 28 schwenkbar gelagert. Am Ende des kurzen Armes des Rasthebels 38 ist eine Haltenase 40 gebildet, die durch eine Öffnung 42 in der Wandung des Führungsrohres 28 hindurch in dessen Innenraum hineinragt und an der von der Schraubenfeder 30 abgewandten Fläche des Kolbens 32 angreift. Der lange Arm des Rasthebels 38 liegt mit seinem freien, abgeschrägten Ende auf einer Haltefläche 44 auf, die an dem einen, keilförmig gestalteten Stirnende eines seitlich an dem Winkelstück 24 befestigten Bügels 46 gebildet ist. Die Schwenkachse des Rasthebels 38 liegt radial außerhalb der Auflagefläche der Haltenase 40 auf der Stirnfläche des Kolbens 32. Folglich tritt an dem Rasthebel 38 ein durch die Spannung der Schraubenfeder 30 verursachtes Moment auf, welches bestrebt ist, den Rasthebel 38 entgegen dem Uhrzeigersinn zu verschwenken. Am Rasthebel 38 tritt also ein sogenanntes Öffnungsmoment auf. Durch dieses Öffnungsmoment wird das freie Ende am langen Arm des Rasthebels 38 gegen die Haltefläche 44 des Bügels 46 gedrückt.

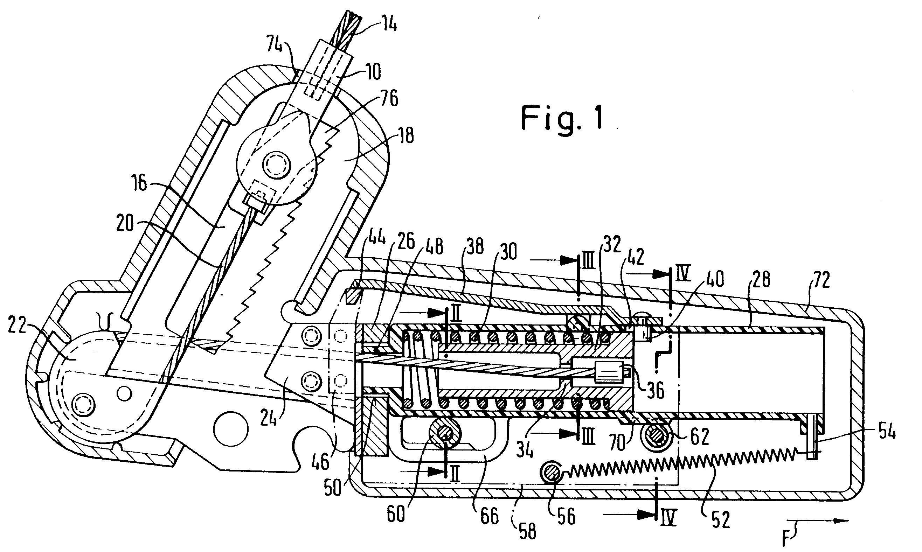

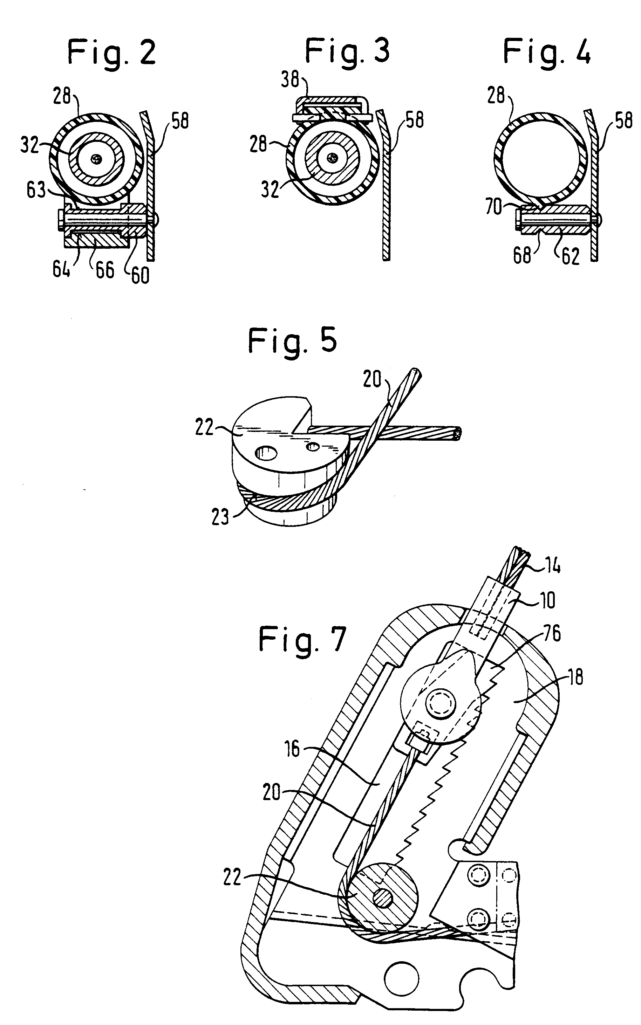

An seinem der Stützplatte 26 benachbarten Ende weist das Führungsrohr 28 einen axialen zylindrischen Fortsatz 48 verminderten Außendurchmessers auf, der mit radialem Abstand in eine Bohrung 50 der Stützplatte 26 eingreift. Der Übergang zwischen dem axialen Fortsatz 48 und dem übrigen Teil des Führungsrohres 28 bildet eine radiale Schulter, die an der benachbarten Fläche der Stützplatte 26 in Anlage ist. In diese in Fig. 1 gezeigte Ruhestellung ist das Führungsrohr mit der darin aufgenommenen Schraubenfeder 30 durch eine Zugfeder 52 vorbelastet, die zwischen einem am freien Ende des Führungsrohres 28 befestigten Stift 54 und einem weiteren Stift 56 eingehängt ist, der an einem Halteblech 58 verankert ist, welches seinerseits an der Stützplatte 26 befestigt ist. An diesem Halteblech 58 sind zwei Wälzkörper 60, 62 drehbar gelagert. Der Wälzkörper 60 ist durch eine an ihrem Außenumfang mit einer breiten Ringnut 62 (Fig. 2) versehene Rolle gebildet. In diese Ringnut 62 greift eine Rippe 64 eines an der Außenseite des Führungsrohres 28 angeschlossenen Führungssteges 66 mit geringem Spiel ein. Auch der Wälzkörper 62 ist durch eine Rolle gebildet, die an ihrem Außenumfang eine Ringnut 68 aufweist. In diese Ringnut 68 greift eine an die Außenwandung des Führungsrohres 28 angesetzte axiale Rippe 70 mit geringem Spiel ein (Fig. 4). Durch die Wälzkörper 60, 62 ist das Führungsrohr 28 somit sowohl in Radialrichtung als auch quer zur Radialrichtung abgestützt und zur Ausführung einer Translationsverschiebung in Axialrichtung an der durch die Montageplatte 18, die Stützplatte 26 und das Halteblech 58 gebildeten Stützstruktur reibungsarm gelagert.

Der gesamte Rückstrammantrieb wird mit der Montageplatte 18 von einem Gehäuse 72 umgeben, das mit einer Durchgangsöffnung 74 für den Verankerungsbeschlag 10 versehen ist.

Es wird nun die Arbeitsweise der Rückstrammvorrichtung beschrieben. Die gesamte in Fig. 1 gezeigte Baugruppe wird im Fahrzeug so eingebaut, daß die Stirnfläche des Kolbens 32 in Fahrtrichtung weist; die normale Fahrtrichtung ist in Fig. 1 mit einem Pfeil F angedeutet. Bei einer Fahrzeugverzögerung ist das Führungsrohr 28 mit der darin aufgenommenen Schraubenfeder 30 bestrebt, eine Translationsverschiebung entgegen der Federspannung der Zugfeder 52 in Fahrtrichtung auszuführen. Die Schwelle, bei welcher eine Translationsverschiebung des Führungsrohres 28 erfolgt, wird durch die Bemessung der Federspannung der Zugfeder 52 bestimmt. Bei der Translationsverschiebung des Führungsrohres 28 wird der Rasthebel 38 gleichfalls translatorisch verlagert, wobei das freie Ende am langen Arm des Rasthebels 28 über die Haltefläche 44 des Bügels 46 gleitet. Nach einer Translationsbewegung des Führungsrohres 28 von wenigen Millimetern gelangt das freie, abgeschrägte Ende des Rasthebels 38 über die Endkante der Haltefläche 44 hinaus. Die durch die Abschrägung am freien Ende des Rasthebels 38 gebildete Schrägfläche greift nunmehr unter die durch die Keilform am Stirnende des Bügels 46 gebildete, zurückweichende Schrägfläche, die eine unbehinderte Weiterbewegung des Rasthebels 38 zuläßt. Der Rasthebel 38 kann daher dem über den Kolben 32 auf die Rastnase 40 ausgeübten Druck der Schraubenfeder 30 unbehindert nachgeben, so daß er plötzlich freigegeben wird und eine Verschwenkung entgegen dem Uhrzeigersinn ausführt. Die Schraubenfeder 30 entspannt sich nunmehr schlagartig und bewegt zunächst das Führungsrohr 28 in Anlage an der Stützplatte 26, wobei das freie Ende des Rasthebels 38 unter die an die Haltefläche 44 anschließende, zurückspringende Schrägfläche fährt, und dann den Kolben 32 im Führungsrohr 28 in Richtung von der Stützplatte 26 fort. Zugleich wird auf das Zugseil 20 ein Zug ausgeübt, der über das Umlenkelement 22 auf den Verankerungsbeschlag 10 übertragen wird. Dieser wird in der rechteckigen Ausnehmung 16 der Montageplatte 18 schräg zum Fahrzeugboden hin verlagert, wobei auch das Gurtschloß 12 mitgenommen wird, um die Gurtlose im Sicherheitsgurtsystem zu beseitigen. Eine anschließende Rückbewegung des Verankerungsbeschlages 10 wird durch eine Rücklaufsperre verhindert, die durch ein am Verankerungsbeschlag 10 schwenkbar gelagertes Raststück 76 und eine an einer Längsseite der Ausnehmung 16 gebildete Rastverzahnung gebildet ist, gegen die das Raststück 76 durch eine Feder vorbelastet wird.

In dem oben beschriebenen Auslösemechanismus der Rückstrammvorrichtung wird als fahrzeugsensitive Sensormasse die kombinierte Masse der Schraubenfeder 30, des Kolbens 32, des Rasthebels 38 sowie des Führungsrohres 28 verwendet. Von diesen Teilen weist die Schraubenfeder 30 die weitaus größere Masse auf; das Führungsrohr 28 kann aus einem Werkstoff geringen Gewichts, beispielsweise aus Kunststoff, bestehen. Berücksichtigt man, daß ein Auslösemechanismus mit einer fahrzeugsensitiven Sensormasse erhebliche Auslösekräfte aufbringen muß, um imstande zu sein, die unter einer hohen Vorspannung von beispielsweise 2000 N stehende Schraubenfeder 30 bei einem genau und reproduzierbar vordefinierten Fahrzeug-Verzögerungswert auszulösen, so wird ersichtlich, daß der Wegfall einer gesonderten fahrzeugsensitiven Sensormasse eine erhebliche Einsparung an Gewicht und Baugröße mit sich bringt. Der beschriebene Auslösemechanismus läßt sogar erhebliche Bauteil- und Montagetoleranzen zu, da die für eine Auslösung notwendige Translationsverschiebung des Führungsrohres 28 mit einigen Millimetern relativ groß gewählt werden kann. Durch die reibungsarme, leichtgängige Lagerung des Führungsrohres 28 wird eine sichere Rückführung desselben in seine Ruhelage durch die Zugfeder 52 erreicht, wenn die Fahrzeugverzögerung den Auslöse-Schwellwert nicht erreicht und anschließend wieder abnimmt. Damit das Zugseil 20 die Translationsverschiebung des Führungsrohres 28 nicht behindert, ist das Anschlagklötzchen 36 in einem Abstand von der Zwischenwandung 34 angeordnet, der größer ist als die Bewegungsstrecke des Führungsrohres 28 bis zur Auslösung. Diese Bewegungsstrecke ist gleich der axialen Länge, mit welcher das freie Ende des Rasthebels 38 auf der Haltefläche 44 aufliegt. Auch die axiale Länge des Fortsatzes 48 des Führungsrohres 38 ist größer als diese Bewegungsstrecke bemessen.

Je nach der Einbausituation im Fahrzeug ist eine mehr oder weniger starke Umlenkung des Zugseils 20 erforderlich. Bei der in Fig. 1 gezeigten Ausführungsform ist das in Fig. 5 gesondert gezeigte Umlenkelement 22 als fest an der Montageplatte angebrachtes Teil ausgebildet, das auf seiner teilzylindrischen Umfangsfläche mit einer gewendelten Führungsfläche 23 in Form einer Anschlagschulter oder Rille versehen ist, an bzw. in der das Zugseil 20 geführt ist. Diese Ausbildung ermöglicht eine Umlenkung des Zugseils 20 mit einem Umschlingungswinkel von deutlich mehr als 180°; bei der in Fig. 1 gezeigten Ausführungsform beträgt der Umschlingungswinkel auf dem Umlenkelement 22 nahezu 240°.

Bei der in Fig. 7 gezeigten Ausführungsform ist das Umlenkelement 22 als Rolle ausgebildet, die an der Montageplatte 18 drehbar gelagert ist.

In jedem Falle ist eine verlustarme Umlenkung des Zugseils 20 von Vorteil. Bei einem an der Montageplatte 18 fest angebrachten Umlenkelement der in Fig. 5 gezeigten Art sind daher reibungsmindernde Maßnahmen von Vorteil, beispielsweise eine günstige Materialpaarung oder der Einsatz von besonderen reibungsvermindernden Substanzen.

Bei weiteren, in der Zeichnung nicht dargestellten Ausführungsformen entfällt die Montageplatte 18, da der Rückstrammantrieb als getrennte Baugruppe fest im Fahrzeug eingebaut ist. Je nach Bedarf und je nach Einbausituation wird das Zugseil zwischen Rückstrammantrieb und Angriffsstelle umgelenkt. Bei der beschriebenen Ausführungsform ist der Verankerungsbeschlag 10 diese Angriffsstelle. Es sind aber auch Ausführungen vorgesehen, bei denen der Rückstrammantrieb insbesondere an der Aufrollerwelle eines Gurtaufrollers angreift.

## Patentansprüche

1. Rückstrammvorrichtung in einem Sicherheitsgurtsystem für Fahrzeuge, mit einem mechanischen Rückstrammantrieb, der eine vorgespannte Schraubenfeder (30) aufweist und an einem Beschlagteil (10) des Sicherheitsgurtsystems angreift, und mit einem Auslösemechanismus (38), der die Schraubenfeder (30) in ihrem vorgespannten Zustand hält und fahrzeugsensitiv zur Auslösung eines Rückstrammvorganges freigibt, **dadurch** **gekennzeichnet**, daß die Schraubenfeder (30) in einem Führungsrohr (28) aufgenommen ist, das an einer fahrzeugfesten Stützstruktur (18, 26, 58) in Axialrichtung translationsverschiebbar gelagert und durch Federspannung (52) in eine Ruhestellung vorgespannt ist.

2. Rückstrammvorrichtung nach Anspruch 1, **dadurch gekennzeichnet,** daß das Führungsrohr (28) auf Wälzkörpern (60, 62) an der Stützstruktur (18, 26, 58) reibungsarm gelagert ist.

3. Rückstrammvorrichtung nach Anspruch 1 oder 2, **dadurch** **gekennzeichnet**, daß die Stützstruktur (18, 26, 58) mit einem Anschlag zur Festlegung der Ruhestellung des Führungsrohres (28) versehen ist.

4. Rückstrammvorrichtung nach Anspruch 3, **dadurch gekennzeichnet,** daß das Führungsrohr (28) einen axialen Fortsatz (48) verminderten Durchmessers aufweist, der in der Ruhestellung des Führungsrohres (28) mit Spiel in eine Bohrung (50) einer Wandung (26) der Stützstruktur eingreift, wobei die den Übergang zwischen dem Fortsatz (48) und dem übrigen Teil des Führungsrohres (28) bildende radiale Stufe an einer Fläche der Wandung anliegt.

5. Rückstrammvorrichtung nach einem der vorstehenden Ansprüche, **dadurch gekennzeichnet,** daß die Schraubenfeder (30) sich mit ihrem einen Ende am Führungsrohr (28) abstützt, daß das andere Ende der Schraubenfeder (30) über einen im Führungsrohr (28) verschiebbaren Kolben (32) abgestützt ist und daß der Auslösemechanismus einen am Kolben (32) angreifenden Rasthebel (38) aufweist.

6. Rückstrammvorrichtung nach Anspruch 5, **dadurch gekennzeichnet,** daß der Rasthebel (38) an dem Führungsrohr (28) schwenkbar gelagert ist.

7. Rückstrammvorrichtung nach Anspruch 6, **dadurch gekennzeichnet,** daß der Rasthebel (38) zweiarmig ausgebildet ist und am Ende seines kürzeren Armes eine Haltenase (40) aufweist sowie am Ende seines längeren Armes abgestützt ist.

8. Rückstrammvorrichtung nach Anspruch 7, **dadurch gekennzeichnet,** daß das freie Ende des längeren Armes des Rasthebels (38) an einer Haltefläche (44) der Stützstruktur (46) abgestützt ist und bei Translationsverschiebung des Führungsrohres (28) über diese Haltefläche (44) gleitet, bis es über deren Endkante hinausgelangt und der Rasthebel (38) unter der Wirkung der Vorspannkraft der Schraubenfeder (30) verschwenkt wird, bis die Haltenase (40) den Kolben (32) freigibt.

9. Rückstrammvorrichtung nach Anspruch 8, **dadurch gekennzeichnet,** daß die Schwenkachse des Rasthebels (38) so gewählt ist, daß er durch die Vorspannkraft der Schraubenfeder (30) mit einem Öffnungsmoment vorbelastet ist.

10. Rückstrammvorrichtung nach einem der vorstehenden Ansprüche, **dadurch gekennzeichnet,** daß die Schraubenfeder (30) über ein Zugseil (20) an dem Beschlagteil (10) angreift.

11. Rückstrammvorrichtung nach Anspruch 10 und einem der Ansprüche 5 bis 9, **dadurch gekennzeichnet,** daß das Zugseil (20) an dem Kolben (32) angreift.

12. Rückstrammvorrichtung nach Anspruch 10 oder 11, **dadurch** **gekennzeichnet**, daß das Beschlagteil (10) in Richtung zum Fahrzeugboden verschiebbar geführt ist, daß an dem Beschlagteil (10) ein Gurtschloß (12) des Sicherheitsgurtsystems verankert ist und daß das Zugseil (20) über eine Umlenkeinrichtung (22) geführt ist.

13. Rückstrammvorrichtung nach Anspruch 12, **dadurch gekennzeichnet,** daß die Umlenkeinrichtung (22) wenigstens eine an der Stützstruktur (18) drehbar gelagerte Umlenkrolle aufweist.

14. Rückstrammvorrichtung nach Anspruch 12, **dadurch gekennzeichnet,** daß die Umlenkeinrichtung (22) durch ein an der Stützstruktur (18) fest angebrachtes Führungsteil gebildet ist, das eine in seiner Umfangsfläche angebrachte gewendelte Führungsfläche (23) für das Zugseil (20) aufweist.

15. Rückstrammvorrichtung nach Anspruch 14, **dadurch gekennzeichnet,** daß der Umschlingungswinkel des Zugseils (20) auf dem Führungsteil (22) größer als 180° ist.

16. Rückstrammvorrichtung nach einem der Ansprüche 2 bis 15, **dadurch gekennzeichnet,** daß die Wälzkörper (60, 62) das Führungsrohr (28) sowohl radial als auch quer zur Radialrichtung an der Stützstruktur (26, 58) abstützen und führen.

17. Rückstrammvorrichtung nach einem der Ansprüche 8 bis 16, **dadurch gekennzeichnet,** daß das freie Ende am längeren Arm des Rasthebels (38) abgeschrägt ist und an die Endkante der Haltefläche (44) eine zurückweichende Schrägfläche anschließt, an der das freie Ende des Rasthebels (38) abgewiesen wird.

18. Rückstrammvorrichtung nach einem der vorstehenden Ansprüche, **dadurch gekennzeichnet,** daß der Rückstrammantrieb eine eigenständige, fest im Fahrzeug eingebaute Baugruppe bildet, die über ein bei Bedarf umgelenktes Zugseil (20) mit einer Angriffsstelle im Gurtsystem verbunden ist.

## Claims

1. Tightening means in a safety belt system for vehicles comprising a mechanical tightening drive which has a biased helical spring (30) and engages a fitting (10) of the safety belt system, and a trigger mechanism (38) which holds the helical spring (30) in its biased state and in vehicle-sensitive manner releases said spring to initiate a tightening operation, characterized in that the helical spring (30) is accommodated in a guide tube (28) which is mounted translationally displaceable in the axial direction on a vehicle-fixed support structure (18, 26, 58) and is biased by spring tension (52) into a rest position.

2. Tightening means according to claim 1, characterized in that the guide tube (28) is mounted in low-friction manner on roller bodies (60, 62) on the support structure (18, 26, 58).

3. Tightening means according to claim 1 or 2, characterized in that the support structure (18, 26, 58) is provided with a stop for defining the rest position of the guide tube (28).

4. Tightening means according to claim 3, characterized in that the guide tube (28) comprises an axial extension (48) of reduced diameter which in the rest position of the guide tube (28) engages with play into a bore (50) of a wall (26) of the support structure, the radial step forming the transition between the extension (48) and the remaining part of the guide tube (28) bearing on a surface of the wall.

5. Tightening means according to any one of the preceding claims, characterized in that the helical spring (30) bears with its one end on the guide tube (28), that the other end of the helical spring (30) is supported via a piston (32) displaceable in the guide tube (28) and that the trigger mechanism comprises a detent lever (38) engaging the piston (32).

6. Tightening means according to claim 5, characterized in that the detent lever (38) is pivotally mounted on the guide tube (28).

7. Tightening means according to claim 6, characterized in that the detent lever (38) is made two-armed and at the end of its shorter arm has a holding nose (40) and is supported at the end of its longer arm.

8. Tightening means according to claim 7, characterized in that the free end of the longer arm of the detent lever (38) is supported at a holding surface (44) of the support structure (46) and on translational displacement of the guide tube (28) slides over said holding surface (44) until it passes beyond the end edge thereof and the detent lever (38) is pivoted under the action of the biasing force of the helical spring (30) until the holding nose (40) releases the piston (32).

9. Tightening means according to claim 8, characterized in that the pivot axis of the detent lever (38) is so selected that said lever is biased by the pretensioned force of the helical spring (30) with an opening moment.

10. Tightening means according to any one of the preceding claims, characterized in that the helical spring (30) engages the fitting (10) via a pulling cable (20).

11. Tightening means according to claim 10 and any one of claims 5 to 9, characterized in that the pulling cable (20) engages the piston (32).

12. Tightening means according to claim 10 or 11, characterized in that the fitting (10) is displaceably guided in the direction towards the vehicle floor, that to the fitting (10) a belt lock (12) of the safety belt system is anchored and that the pulling cable (20) is guided via a deflecting means (22).

13. Tightening means according to claim 12, characterized in that the deflecting means (22) comprises at least one deflecting roller rotatably mounted on the support structure (18).

14. Tightening means according to claim 12, characterized in that the deflecting means (22) is formed by a guide member which is fixedly attached to the support structure (18) and which comprises a spiral guide surface (23) formed in its peripheral surface for the pulling cable (20).

15. Tightening means according to claim 14, characterized in that the wrap angle of the pulling cable (20) on the guide member (22) is greater than 18°.

16. Tightening means according to any one of claims 2 to 15, characterized in that the roller bodies (60, 62) support and guide the guide tube (28) both radially and transversely to the radial direction on the support structure (26, 58).

17. Tightening means according to any one of claims 8 to 16, characterized in that the free end at the longer arm of the detent lever (38) is bevelled and the end edge of the holding surface (44) is adjoined by a rearwardly extending inclined face at which the free end of the detent lever (38) is repelled.

18. Tightening means according to any one of the preceding claims, characterized in that the tightening drive forms an independent assembly which is fixedly incorporated in the vehicle and which is connected to an engagement point in the belt system via a pulling cable (20) deflected as required.

## Revendications

1. Dispositif de rétraction dans un système de ceinture de sécurité pour véhicules, comprenant une commande mécanique de rétraction qui comporte un ressort hélicoïdal (30) sous précontrainte et qui attaque une ferrure (10) du système de ceinture de sécurité, ledit dispositif comprenant par ailleurs un mécanisme de déclenchement (38) qui maintient le ressort hélicoïdal (30) à l'état de précontrainte et qui est sensible au véhicule pour libérer ce ressort afin de déclencher le processus de rétraction, caractérisé en ce que le ressort hélicoïdal (30) est logé dans un tube de guidage (28) qui est monté mobile en translation, en direction axiale, sur une structure de support (18, 26, 58) fixée sur le véhicule, ce tube de guidage étant placé sous la précontrainte de la tension d'un ressort (52) en position de repos.

2. Dispositif de rétraction selon la revendication 1, caractérisé en ce que le tube de guidage (28) est monté avec faible frottement sur des corps de roulement (60, 62) sur la structure de support (18, 26, 58).

3. Dispositif de rétraction selon la revendication 1 ou 2, caractérisé en ce que la structure de support (18, 26, 58) comporte une butée de fixation de la position de repos du tube de guidage (28).

4. Dispositif de rétraction selon la revendication 3, caractérisé en ce que le tube de guidage (28) comporte un prolongement axial (48) de diamètre réduit, qui se loge avec jeu dans un trou (50) d'une cloison (26) de la structure de support lorsque le tube de guidage (28) est en position de repos, l'épaulement radial formant la transition entre le prolongement (48) et le reste du tube de guidage (28) s'appliquant contre une surface de la cloison.

5. Dispositif de rétraction selon l'une des revendications précédentes, caractérisé en ce que le ressort hélicoïdal (30) prend appui par l'une de ses extrémités contre le tube de guidage (28), en ce que l'autre extrémité du ressort hélicoïdal (30) prend appui sur un piston (32) mobile dans le tube de guidage (28) et en ce que le mécanisme de déclenchement comprend un levier à cliquet (38) qui attaque le piston (32).

6. Dispositif de rétraction selon la revendication 5, caractérisé en ce que le levier à cliquet (38) est monté inclinable sur le tube de guidage (28).

7. Dispositif de rétraction selon la revendication 6, caractérisé en ce que le levier à cliquet (38) est à deux bras et comprend à l'extrémité de son bras court un talon de retenue (40), tandis qu'il prend appui à l'extrémité de son bras long.

8. Dispositif de rétraction selon la revendication 7, caractérisé en ce que l'extrémité libre du bras long du levier à cliquet (38) prend appui sur une surface de retenue (44) de la structure de support (46) et elle glisse sur cette surface de retenue (44) lors d'un mouvement de translation du tube de guidage (28) jusqu'à ce qu'elle s'extraie du bord extrême de cette surface de retenue et le levier à cliquet (38) s'incline sous l'effet de la force de précontrainte du ressort hélicoïdal (30) jusqu'à ce que le talon de retenue (40) libère le piston (32).

9. Dispositif de rétraction selon la revendication 8, caractérisé en ce que l'axe d'inclinaison du levier à cliquet (38) est adopté de manière que celui-ci soit sous la précontrainte d'un couple d'ouverture exercé par la force de précontrainte du ressort hélicoïdal (30).

10. Dispositif de rétraction selon l'une des revendications précédentes, caractérisé en ce que le ressort hélicoïdal (30) attaque la ferrure (10) au moyen d'un câble de traction (20).

11. Dispositif de rétraction selon la revendication 10 et l'une des revendications 5 à 9, caractérisé en ce que le câble de traction (20) attaque le piston (32).

12. Dispositif de rétraction selon la revendication 10 ou 11, caractérisé en ce que la ferrure (10) est guidée mobile vers le fond du véhicule, en ce qu'un verrou (12) du système à ceinture de sécurité est accroché à la ferrure (10) et en ce que le câble de traction (20) passe sur un dispositif de renvoi (22).

13. Dispositif de rétraction selon la revendication 12, caractérisé en ce que le dispositif de renvoi (22) comprend au moins un galet de renvoi monté rotatif sur la structure de support (18).

14. Dispositif de rétraction selon la revendication 12, caractérisé en ce que le dispositif de renvoi (22) est formé d'un guide fixé sur la structure de support (18) et comprenant une surface (23) de guidage du câble de traction (20) qui est disposée en hélice sur sa surface circonférentielle.

15. Dispositif de rétraction selon la revendication 14, caractérisé en ce que l'angle d'enroulement du câble de traction (20) sur le guide (22) est supérieur à 180°.

16. Dispositif de rétraction selon l'une des revendications 2 à 15, caractérisé en ce que les corps de roulement (60, 62) supportent et guident le tube de guidage (28) sur la structure de support (26, 58) aussi bien radialement que transversalement par rapport à la direction radiale.

17. Dispositif de rétraction selon l'une des revendications 8 à 16, caractérisé en ce que l'extrémité libre du bras long du levier à cliquet (38) est chanfreinée et en ce qu'une surface oblique formant un congé et sur laquelle l'extrémité libre du levier à cliquet (38) est en retrait est disposée dans le prolongement du bord extrême de la surface de retenue (44).

18. Dispositif de rétraction selon l'une des revendications précédentes, caractérisé en ce que la commande de rétraction forme un module autonome, monté en position fixe dans le véhicule et qui est relié à un point d'attaque situé dans le système à ceinture au moyen d'un câble de traction (20) qui, si nécessaire, passe sur un renvoi.
